# EUROPEAN PATENT SPECIFICATION

(11) **EP 4 237 670 B1**
(45) Date of publication and mention of the grant of the patent: **18.02.2026**
(21) Application number: 21885403.2
(22) Date of filing: 29.10.2021
(51) Int. Cl.: F01N 3/04, B63B 13/02, B63H 21/32, B01D 53/18, B01D 53/50, F04D 29/44

(54) **SCRUBBER OUTLET ASSEMBLY**
WÄSCHERAUSLASSANORDNUNG
ENSEMBLE SORTIE DE LAVEUR

(30) Priority: 30.10.2020 DK PA202001229; 28.05.2021 DK PA202100569
(43) Date of publication of application: 06.09.2023
(73) Proprietor: Maersk A/S, 1263 Copenhagen K (DK)
(72) Inventor: KAHLE, Jorn, 1263 Copenhagen (DK); AUSTIN-FRASER, Toby, 1263 Copenhagen (DK)
(74) Representative: EIP
(86) International application number: PCT/DK2021/050321
(87) International publication number: WO 2022/089706

(56) References cited:
- WO-A1-2012/113977
- WO-A1-2019/007559
- WO-A1-2019/007559
- WO-A1-2019/101286
- WO-A1-2020/143112
- CN-A- 111 457 164
- CN-U- 211 494 427
- KR-B1- 102 134 370
- KR-U- 20200 000 794

## Description

### TECHNICAL FIELD

The present invention relates to scrubber outlet assemblies and scrubber outlet diffusers, such as scrubber outlet assemblies and scrubber outlet diffusers for marine vessels, to marine vessels comprising the scrubber outlet assemblies and scrubber outlet diffusers, to kits of parts for the scrubber outlet diffusers, and to methods of assembling scrubber outlet assemblies and scrubber outlet diffusers.

### BACKGROUND

Marine vessels, such as container ships, have engines that are powered by heavy fuel oil (HFO) or the like. Such fuel contains sulphur which, following combustion in an engine of the marine vessel, forms sulphur oxides (SOx), which are emitted into the atmosphere as exhaust gas emissions.

Since 2005, the United Nations shipping agency, the International Maritime Organisation (IMO), has implemented global regulations to limit the amount of SOx, and other exhaust gases, emitted from the engines of marine vessels. The regulations are set out in Annex VI of the International Convention for the Prevention of Pollution from Ships (known as the MARPOL Convention). In 2020, the IMO regulations were updated to restrict marine vessels to the use of fuels having a maximum sulphur content of 0.5%, down from 3.5% in previous years. Some marine vessels have exhaust gas cleaning systems (EGCS), or "scrubbers", installed to meet exhaust gas SOx limits set by the IMO. Marine vessels installed with scrubbers may use fuels which have a sulphur content higher than the limit set by the IMO, such as HFO or the like.

Scrubbers are installed in exhaust gas systems of marine vessels to remove SOx and other particulate matter from the exhaust gases of engines or boilers of the marine vessels. Scrubbers are also used in other industries where it is necessary or desirable to remove pollutants, odours, and/or corrosive components from a gas stream before it enters the environment, such as in chemical processing facilities, power stations, and wastewater treatment facilities. Wet scrubbers and dry scrubbers are known in the art. In each case, an exhaust gas is exposed to an alkaline scrubbing material to neutralise the exhaust gas, which is acidic, and to remove any impurities in the exhaust gas. In wet scrubbers, water, or another suitable fluid, is sprayed into the exhaust gas stream to remove SOx from the exhaust gas stream. In dry scrubbers, a dry reagent, such as limes, is sprayed into the exhaust gas stream for the same purpose, or the exhaust gas stream is passed through the dry reagent.

Wet scrubbers installed on marine vessels typically use either fresh water or sea water as the scrubbing reagent. In some cases, additives such as caustic soda (sodium hydroxide, NaOH) and limestone (calcium carbonate, CaCO3) are added to the water. In open-loop scrubbers, sea water is used as the scrubbing reagent, which is sprayed into an exhaust gas stream to convert SOx to sulphates or sulphuric acid, and the effluent from the scrubber, also known as "washwater", is discharged into the sea. The washwater is thus an acidic, high-temperature effluent, which poses a risk of damage to pipework at scrubber outlets, primarily due to corrosion. In some cases, particularly on larger marine vessels, a diffuser is required at the scrubber outlet to increase a level of mixing of washwater with surrounding sea water, thereby to neutralise the washwater as it is discharged into the ocean. Example criteria for the washwater are set out by the Marine Environment Protection Agency (MEPC) in Section 10 of the Resolution MEPC 259(68), Guidelines for Exhaust Gas Cleaning Systems. For example, the washwater should have a minimum pH of 6.5 at a distance of 4m away from a discharge point of the washwater into the surrounding ocean with the ship stationary.

It is known to provide a corrosion-resistant coating to mitigate damage to the pipework. For example, the diffuser is welded into the pipe and the diffuser, pipe and/or weld are then coated with a corrosion-resistant coating, such as a vinyl ester coating. There is a risk of corrosion, such as at the weld, partly because it is difficult to properly coat the complex shape of the diffuser in the pipe. This leads to gaps or weaknesses in the coating, exposing the underlying material to the corrosive washwater.

In one known solution, a scrubber outlet pipe and a diffuser are made from the same corrosion-resistant material, specifically austenitic stainless-steel. In this case, a corrosion-resistant coating need not necessarily be applied. Nevertheless, there is still a risk of galvanic corrosion, such as between the stainless-steel pipe and a mild steel hull of the marine vessel to which it is coupled.

CN 111457164 A describes an overboard discharge pipe comprising a first plastic coating layer attached to an internal pipe wall, and a second plastic coating layer attached to the first plastic coating layer. KR 2020 0000794 U describes an external discharge pipe, with a flow obstacle formed inside the external discharge pipe to control the discharge direction of wash water discharged from a hull. WO 2019/007559 A1 describes a water lead-through module for discharging water having a flow tube of first grade steel and a planar transition plate of second grade steel.

Embodiments of the present invention aim to reduce a risk of corrosion of scrubber outlet pipework while addressing the aforementioned problems.

### SUMMARY

A first aspect of the present invention provides a scrubber outlet assembly, the scrubber outlet assembly comprising: a pipe having an inner surface, wherein the inner surface has a first portion made from a first electrically conductive material, a second portion made from a second electrically conductive material dissimilar to the first electrically conductive material, and a region comprising at least a part of the first portion and at least a part of the second portion; and a barrier located inwardly of the inner surface of the pipe; wherein the scrubber outlet assembly defines a flow path through the pipe along which washwater is flowable from a scrubber in use, and wherein the barrier fluidically isolates the region from the flow path.

Optionally, the scrubber outlet assembly is for a marine vessel. Optionally, the scrubber outlet assembly is for an industrial scrubber system, such as a scrubber system for a chemical processing facility, a power station, or a wastewater treatment facility.

The region is protected by the barrier from potential galvanic corrosion in the presence of the washwater in the flow path. The washwater may be effluent from the scrubber. The washwater may be acidic, and may be at a raised temperature compared to, for example, sea water surrounding the marine vessel, in use. Thus, the scrubber outlet assembly materials and/or materials of a hull of the marine vessel in contact with the washwater may be more susceptible to corrosion, such as galvanic corrosion. Accordingly, a potential for galvanic corrosion between the first and second dissimilar electrically conductive materials may be reduced or eliminated.

Optionally, the first electrically conductive material is a corrosion-resistant material. This may reduce a potential for corrosion of a section of the first portion of the inner surface of the pipe, when that section is exposed to the flow path, and thus exposed to the washwater, in use. The first electrically conductive material may be a metal alloy, such as a nickel-chromium-based alloy, or a stainless steel, such as austenitic stainless steel, for example. Alternatively, or in addition, the first and/or second electrically conductive material may be coated with a corrosion-resistant coating, such as a vinyl ester coating.

Optionally, the barrier comprises an electrically insulative material bridging the at least a part of the first portion and the at least a part of the second portion.

In this way at least part of the barrier may be resistant to galvanic corrosion. A part of the barrier comprising the electrically insulative material may contact the first and/or the second portion of the inner surface of the pipe. In this way, a potential for galvanic corrosion between the barrier and the respective first and/or second portion of the inner surface of the pipe may be reduced or eliminated.

Optionally, the barrier comprises a material resistant to corrosion and/or abrasion in the presence of the washwater. The abrasion-resistant material may be resistant to mechanical wear, for example in the presence of solid particles in the washwater, which may rub or scrape against the barrier in use. The barrier may comprise a material selected from an epoxy putty or resin, an adhesive, and/or a corrosion-resistant coating, such as a vinyl ester coating, for example. The material may be applied to the inner surface of the pipe.

Optionally, the barrier comprises a tube surrounding the flow path.

Optionally, the tube is formed from an electrically insulative material. Further optionally, the tube is formed from a corrosion-resistant material. For example, the tube may be formed from an epoxy resin, such as a glass-fibre reinforced epoxy (GRE) material, or from a vinyl ester. The tube is located within the pipe. The tube may project from within the pipe or may be housed fully within the pipe.

Optionally, the tube is bonded to the inner surface of the pipe by adhesive between the tube and the pipe.

Optionally, the adhesive is electrically insulative. Optionally, the adhesive is provided in a space between the tube and the inner surface of the pipe. Spacing the tube from the pipe may improve an ease of manufacture of the scrubber outlet assembly and may ensure a more uniform distribution of the adhesive in the space, for example to prevent the formation of air bubbles, and to improve a bond provided by the adhesive.

Optionally, the tube comprises one or more protrusions at an outer surface thereof. The one or more protrusions may be raised portions of an outer surface of the tube. That is, they may be integral with other portions of, or the rest of, the tube. Optionally, the protrusions are discrete parts provided on the outer surface of the tube, such as by bonding the protrusions to the outer surface of the tube. Optionally, the protrusions are elongate protrusions extending longitudinally along at least a part of the outer surface of the tube. The protrusions may extend along a full length of the tube. In other examples, the protrusions are arranged at the outer surface of the tube in any other suitable way. The protrusions may help to align the tube within the pipe, such as centrally within the pipe, during assembly to provide the space between the tube and the pipe.

Optionally, the adhesive fills a space between the tube and the inner surface of the pipe and contacts the at least a part of the first portion and the at least a part of the second portion of the inner surface of the pipe.

In this way, the adhesive may form a part of the barrier for isolating the region from the washwater. The adhesive may be a casting compound such as an epoxy resin. The adhesive may be resilient to thermal and/or physical shock, which may provide a more reliable bond between the tube and the pipe in harsh conditions, as may be present in use on a marine vessel.

Optionally, the scrubber outlet assembly comprises a diffuser located in the tube and arranged to interrupt the flow path.

The diffuser may be for imparting turbulence into, and/or increasing a velocity component of, the washwater flowing in the flow path, in use. This may reduce a pH level of the washwater in proximity to the hull or the scrubber outlet of the marine vessel. For example, an increased axial velocity may project the washwater further away from the hull. Alternatively, or in addition, an increased radial or azimuthal velocity, or increased turbulence in the flow, may lead to increased entrainment or mixing of the washwater with the sea water into which it is to be expelled.

Optionally, the diffuser is formed from an electrically insulative material. Further optionally, the diffuser is formed from a corrosion-resistant material. For example, the diffuser may be formed from an epoxy resin, such as a glass-fibre reinforced epoxy (GRE) material, or from a vinyl ester. The diffuser may be formed of the same or similar material as the tube, or may be any other suitable material. The diffuser may comprise one or more diffuser parts, such as fins or guide vanes. The diffuser may be mounted within the tube in any suitable way, such as by bonding using an adhesive. The diffuser may be integral with the tube so that the tube and diffuser are unitary. In this way, a join or joins between the diffuser and the tube may be resistant to galvanic corrosion.

Optionally, the pipe comprises an open end, and the inner surface of the pipe comprises an end portion extending between the open end and the region comprising the part of the first portion and the part of the second portion; and the tube extends to, or beyond, the open end of the pipe to isolate the end portion from the flow path. In this way, the end portion, which may be the second portion, may be better protected from corrosion by the tube. This is particularly advantageous where the open end is for connection to a hull of the marine vessel, and/or where the end portion is formed of the same or similar material to the hull of the marine vessel, which may be more susceptible to corrosion in the presence of the washwater.

A part of the hull of the marine vessel may comprise an aperture. The open end may cooperate with the aperture to define a scrubber outlet for expelling fluid through the hull of the marine vessel. For example, the pipe may abut the aperture to define the scrubber outlet. Optionally, the pipe may extend through the aperture so that the open end defines the scrubber outlet. The scrubber outlet assembly may comprise the part of the hull of the marine vessel, for example if the part of the hull is removed from the rest of the hull for assembly of the scrubber outlet assembly.

Optionally, the pipe may comprise a first section and a second section connected to the first section, wherein an inner surface of the first section comprises the first portion of the inner surface of the pipe, and an inner surface of the second section comprises the second portion of the inner surface of the pipe. Each of the first and second sections of the pipe may be tubular. The first section may be formed of the first electrically conductive material and the second section may be formed of the second electrically conductive material. The first and second sections may be connected, or fixed, to one another in any suitable way, such as welded, bonded, bolted, or clamped to one another.

Optionally, the pipe comprises a pipe section having an inner surface comprising the second electrically conductive material, and the first electrically conductive material is provided on a portion of the inner surface of the pipe section to define the first portion of the inner surface of the pipe. In this way, the pipe may comprise a pipe material, such as mild steel, defining the pipe section, and the first electrically conductive material may comprise a corrosion-resistant cladding or coating or other tubular component on the portion of the inner surface of the pipe section.

Optionally, the tubular component is a sleeve. Optionally, the sleeve comprises a flange portion for connecting to a corresponding flange of the pipe section, such as at an inboard end of the pipe section, on insertion of the sleeve into the pipe section. Optionally, the tubular component, such as the sleeve, or a part thereof, is radially spaced from the inner surface of the pipe section. This may provide a gap between the tubular component and the inner surface of the pipe section. In this way, the first portion of the inner surface of the pipe may be defined by the inner surface of the tubular component, the second portion of the inner surface of the pipe may be defined by the inner surface of the pipe section, and the region may comprise at least a part of the inner surface of the tubular component, at least a part of the inner surface of the pipe section, and the gap. That is, the inner surface of the pipe comprises the whole of the side of the pipe which would be exposed to the flow path in the absence of the barrier. The first and second portions of the inner surface of the pipe may still be sufficiently close to each other to present an increased risk of galvanic corrosion in the region without the barrier. Therefore, the barrier is provided to fluidically isolate the region from the flow path. Optionally, an electrically insulative material, such as the adhesive or chocking material, is located in the gap, so that at least parts of the first and second portions are separated by the electrically insulative material.

Also disclosed is a scrubber outlet diffuser, the scrubber outlet diffuser comprising: an electrically insulative tube having a flow path through which washwater is flowable from a scrubber, in use; and a diffuser located in the tube and arranged to interrupt the flow path.

Optionally, the scrubber outlet diffuser is for a marine vessel, such as for a scrubber outlet assembly of a marine vessel.

Optionally, the electrically insulative tube is formed from a corrosion-resistant material. For example, the tube may be formed from an epoxy resin, such as a glass-fibre reinforced epoxy (GRE) material, or from a vinyl ester.

Optionally, the diffuser is electrically insulative. Further optionally, the diffuser is formed from a corrosion-resistant material. For example, the diffuser may be formed from an epoxy resin, such as a glass-fibre reinforced epoxy (GRE) material, or from a vinyl ester. Optionally, the diffuser and the tube are made from the same material. The diffuser may comprise one or more diffuser parts, such as fins or guide vanes. The diffuser may be mounted within the tube in any suitable way, such as by bonding using an adhesive. The diffuser may be integral with the tube so that the tube and diffuser are unitary. In this way, a join or joins between the diffuser and the tube may be resistant to galvanic corrosion.

A second aspect of the present invention provides a marine vessel comprising a scrubber outlet assembly according to the first aspect.

Optionally, the marine vessel is a container ship.

The scrubber outlet assembly may comprise any of the optional features discussed above of the scrubber outlet assembly of the first aspect..

Optionally, the marine vessel comprises a scrubber system and an engine or a boiler, wherein the scrubber system is for removing sulphur oxides from an exhaust gas stream of the engine or boiler. The scrubber outlet assembly of the first aspect may be a part of the scrubber system.

Optionally, the second portion of the inner surface of the pipe of the scrubber outlet assembly is formed of the same material as a hull of the marine vessel. This may permit the pipe to be fixed, such as welded, to the hull of the marine vessel, while reducing a risk of galvanic corrosion of the pipe and/or the hull in contact with sea water. Alternatively, the second portion of the inner surface of the pipe of the scrubber outlet assembly may be formed of a different material to that of the hull, such as a material with a higher resistance to corrosion than the material of the hull.

Also disclosed is a kit of parts for the scrubber outlet diffuser discussed above, the kit of parts comprising: the electrically insulative tube through which washwater is flowable from a scrubber, in use; and the diffuser, or parts that are configured to be assembled to form the diffuser, locatable in the tube to interrupt the flow path.

The scrubber outlet diffuser may comprise any of the optional features of the scrubber outlet diffuser discussed above. For example, the tube may comprise any of the optional features of the tube of the scrubber outlet diffuser discussed above, and/or the diffuser may comprise any of the optional features of the diffuser of the scrubber outlet diffuser discussed above.

Also disclosed is a kit of parts for the scrubber outlet assembly of the first aspect, the kit of parts comprising: the pipe having an inner surface, wherein the inner surface has a first portion made from a first electrically conductive material, a second portion made from a second electrically conductive material dissimilar to the first electrically conductive material, and a region comprising at least a part the first portion and at least a part of the second portion, wherein the pipe has a flow path therethrough along which washwater is flowable from a scrubber, in use; and the barrier, or materials that are configured to be assembled to form the barrier, for arranging radially inwardly of the inner surface of the pipe for fluidically isolating the region from the flow path.

Optionally, the kit of parts for the scrubber outlet assembly comprises a first section comprising the first portion of the inner surface of the pipe; and a second section comprising the second portion of the inner surface of the pipe; wherein the first and second sections are connected or connectable to form the pipe. Each of the first and second sections may be tubular.

The scrubber outlet assembly may comprise any of the optional features discussed above of the scrubber outlet assembly of the first aspect. For example, the pipe may comprise any of the optional features discussed above of the pipe of the scrubber outlet assembly of the first aspect, and/or the barrier may comprise any of the optional features discussed above of the barrier of the scrubber outlet assembly of the first aspect.

A third aspect of the present invention provides a method of assembling a scrubber outlet assembly, the method comprising: providing a pipe having an inner surface, wherein the inner surface has a first portion made from a first electrically conductive material, a second portion made from a second electrically conductive material dissimilar to the first electrically conductive material, and a region comprising at least a part of the first portion and at least a part of the second portion, and wherein the pipe has a flow path therethrough along which washwater is flowable from a scrubber, in use; and arranging a barrier radially inwardly of the inner surface of the pipe to fluidically isolate the region from the flow path.

Optionally, the scrubber outlet assembly is for a marine vessel. Optionally, the scrubber outlet assembly is for an industrial scrubber system, such as a scrubber system for a chemical processing facility, a power station, or a wastewater treatment facility.

Optionally, the first electrically conductive material is a corrosion-resistant material. The first electrically conductive material may be a metal alloy, such as a nickel-chromium-based alloy, or a stainless steel, such as austenitic stainless steel, for example. Alternatively, or in addition, the first and/or second electrically conductive material may be coated with a corrosion-resistant coating, such as a vinyl ester coating.

Optionally, the method comprises coating the first and/or second portion with a corrosion-resistant coating.

Optionally, the second portion of the inner surface of the pipe is formed of the same material as a hull of the marine vessel. Alternatively, the second portion of the inner surface of the pipe may be formed of a different material to that of the hull, such as a material with a higher resistance to corrosion than the material of the hull. Optionally, the pipe comprises a pipe section, the second portion of the inner surface of the pipe is at least part of an inner surface of the pipe section, and the method comprises connecting the pipe section to a part of the hull of the marine vessel. Optionally, the method comprises welding the pipe section to the part of the hull of the marine vessel.

Optionally, the barrier comprises an electrically insulative material, and the method comprises arranging the barrier in the pipe so that the electrically insulative material bridges the at least a part of the first portion and the at least a part of the second portion.

Optionally, the method comprises arranging the barrier in the pipe so that a part of the barrier comprising the electrically insulative material contacts the first and/or the second portion of the inner surface of the pipe.

Optionally, the barrier comprises a material resistant to corrosion in the presence of the washwater. The barrier may comprise a material selected from a corrosion-resistant putty, an epoxy resin, an adhesive, and/or a corrosion-resistant coating, such as a vinyl ester coating, for example, and the method may comprise applying the material to the inner surface of the pipe.

Optionally, the barrier comprises a tube, and the method comprises arranging the tube radially inwardly of the inner surface of the pipe so that the tube surrounds the flow path. Optionally, the method comprises locating the tube within the pipe so that the tube projects from within the pipe. Alternatively, the method comprises locating the tube within the pipe so that the tube is housed fully within the pipe.

Optionally, the method comprises providing a diffuser in the tube so that the diffuser interrupts the flow path. Optionally, the diffuser is formed from an electrically insulative material. Further optionally, the diffuser is formed from a corrosion-resistant material. For example, the diffuser may be formed from an epoxy resin, such as a glass-fibre reinforced epoxy (GRE) material, or from a vinyl ester. The diffuser may be formed of the same or similar material as the tube, or may be any other suitable material. The diffuser may comprise one or more diffuser parts, such as fins or guide vanes. Optionally, the method comprises assembling the one or more diffuser parts to form the diffuser. Optionally, the method comprises bonding the diffuser to the tube, such as by using an adhesive. The method may comprise forming the diffuser integrally with the tube so that the tube and diffuser are unitary.

Optionally, the method comprises bonding the tube to the inner surface of the pipe by providing adhesive between the tube and the pipe. Optionally, the method comprises positioning the tube in the pipe to form a space between the tube and the pipe, and providing the adhesive in the space. Optionally, the method comprises filling the space between the tube and the inner surface of the pipe with the adhesive, so that the adhesive contacts the at least a part of the first portion and the at least a part of the second portion of the inner surface of the pipe. Optionally, the adhesive is electrically insulative.

Optionally, the tube is formed from an electrically insulative material. Further optionally, the tube is formed from a corrosion-resistant material. For example, the tube may be formed from an epoxy resin, such as a glass-fibre reinforced epoxy (GRE) material, or from a vinyl ester.

Optionally, the pipe comprises an open end, and the inner surface of the pipe comprises an end portion extending between the open end and the region comprising the part of the first portion and the part of the second portion; and the method comprises arranging the tube in the pipe so that the tube extends to, or beyond, the open end to isolate the end portion from the flow path.

A part of the hull of the marine vessel may comprise an aperture. Optionally, the method comprises arranging the pipe so that the pipe abuts or extends through the aperture, so that the open end defines a scrubber outlet.

Optionally, the providing the pipe comprises: providing a first section comprising the first portion of the inner surface of the pipe; providing a second section comprising the second portion of the inner surface of the pipe; and connecting the first section to the second section. The connecting may form the pipe. Each of the first and second sections of the pipe may be tubular.

Optionally, the providing the pipe comprises: providing a pipe section having an inner surface comprising the second electrically conductive material; and providing, such as by cladding, the first electrically conductive material on a portion of the inner surface of the pipe section to define the first portion of the inner surface of the pipe.

Optionally, the method is a method of assembling the scrubber outlet assembly of the first aspect. Further optionally, the method comprises providing the kit of parts of the third aspect.

The scrubber outlet assembly may comprise any of the optional features discussed above of the scrubber outlet assembly of the first aspect. For example, the pipe may comprise any of the optional features discussed above of the pipe of the scrubber outlet assembly of the first aspect, and/or the barrier may comprise any of the optional features discussed above of the barrier of the scrubber outlet assembly of the first aspect.

Also disclosed is a method of assembling a scrubber outlet diffuser, the method comprising: providing an electrically insulative tube through which washwater is flowable from a scrubber, in use; and locating a diffuser in the tube to interrupt the flow path.

Optionally, the scrubber outlet diffuser is for a marine vessel. Optionally, the scrubber outlet diffuser is for an industrial scrubber system, such as a scrubber system for a chemical processing facility, a power station, or a wastewater treatment facility.

Optionally, the locating the diffuser comprises providing diffuser parts that are configured to be assembled to form the diffuser; and assembling the diffuser parts to form the diffuser.

Optionally, the method comprises fixing the diffuser to the tube, such as by bonding the diffuser to the tube. Optionally, the method comprises providing the tube and the diffuser so that the tube and the diffuser are unitary.

Optionally, the method is a method of assembling the scrubber outlet diffuser of the discussed above. Further optionally, the method comprises providing the kit of parts for the scrubber outlet diffuser discussed above.

The scrubber outlet diffuser may comprise any of the optional features of the scrubber outlet diffuser discussed above. For example, the tube may comprise any of the optional features of the tube of the scrubber outlet diffuser discussed above, and/or the diffuser may comprise any of the optional features of the diffuser of the scrubber outlet diffuser discussed above.

### BRIEF DESCRIPTION OF THE DRAWINGS

Embodiments of the invention will now be described, by way of example only, with reference to the accompanying drawings, in which:
Figure 1 shows a schematic side view of an example marine vessel comprising a scrubber outlet assembly according to an embodiment of the present invention;
Figure 2A shows a schematic cross-section view of the example scrubber outlet assembly of Figure 1;
Figure 2B shows a schematic frontal view of the example scrubber outlet assembly of Figure 1;
Figure 3A shows a schematic cross-section view of an example alternative scrubber outlet assembly according to another embodiment of the present invention;
Figure 3B shows a schematic cross-sectional view of an example alternative scrubber outlet assembly according to a further embodiment of the present invention;
Figure 4 shows a schematic isometric view of an example scrubber outlet diffuser according to the present invention;
Figure 5 shows schematic and top-down views of an example kit of parts for the scrubber outlet diffuser of Figure 4;
Figure 6 shows schematic and top-down views of an example kit of parts for the scrubber outlet assembly of Figure 1;
Figure 7 shows an example method of assembling the scrubber outlet assembly of any one of Figures 2A to 3; and
Figure 8 shows an example method of assembling the scrubber outlet diffuser of any one of Figures 2A to 4.

### DETAILED DESCRIPTION

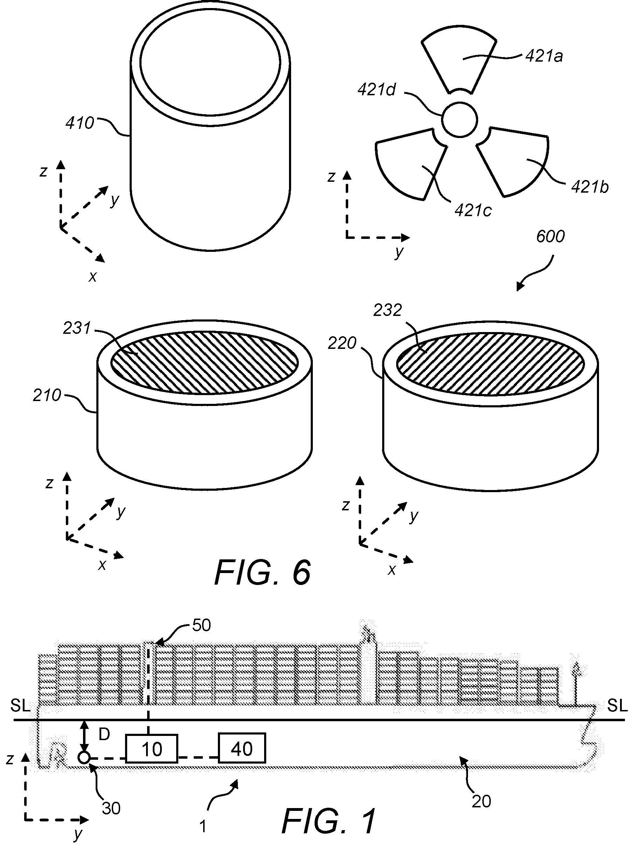

Figure 1 shows a schematic side view of an example of a marine vessel 1, which here is a container ship, comprising a scrubber 10, a hull 20, a scrubber outlet 30, an engine 40, and a stack 50. Exhaust gases from the engine 40 are passed through the scrubber 10 towards the stack 50, to be emitted into the atmosphere. The scrubber is an open-loop scrubber, configured to spray sea water into the exhaust gases to remove pollutants from the exhaust gases. Specifically, the scrubber is configured to remove SOx from the exhaust gases, though in some examples it is configured to remove nitrogen oxides (NOx), soot, or other products of combustion from the exhaust gases.

Contaminated effluent from the scrubber, referred to herein as "washwater", is passed to the scrubber outlet 30 to be expelled though the hull 20 into the ocean surrounding the marine vessel 1. The scrubber outlet 30 is located below sea level, which is indicated by the line labelled "SL" in Figure 1, in use. The distance of the scrubber outlet 30 below sea level, indicated by the arrow D in Figure 1, is up to 10 metres. In some examples, the distance D is up to 1 metre, up to 2 metres, up to 5 meters, or up to 20 metres below sea level. It will be understood that a distance of the scrubber outlet 30 below sea level may depend on the size of the marine vessel 1, and/or a mass of the marine vessel 1, in use.

The washwater comprises sulphuric acid, which is extracted from the exhaust gases in the scrubber 10. The washwater is also at an elevated temperature, as compared to the temperature of the surrounding ocean, due to the heat of the exhaust gases passing through the scrubber 10. Thus, materials exposed to the washwater are at a greater risk of corrosion than the materials exposed to, say, sea water, or fresh water.

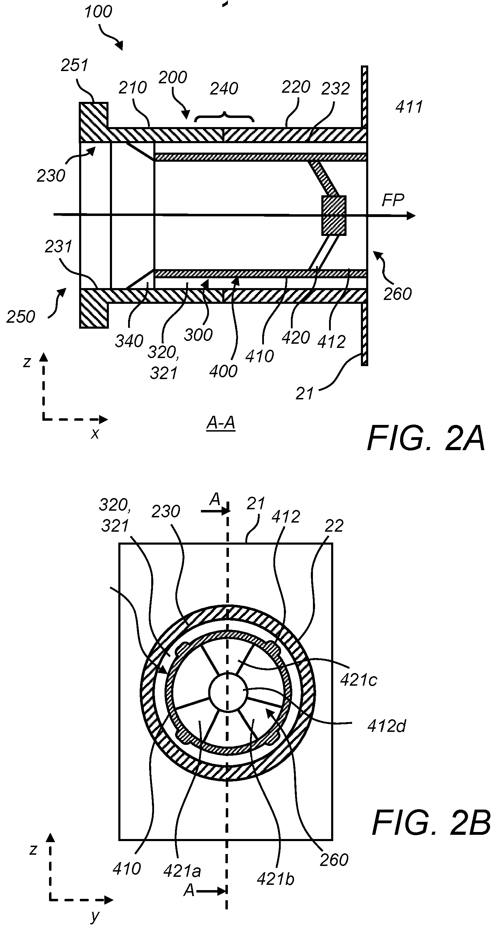

Figures 2A and 2B show an example scrubber outlet assembly 100 of the scrubber 10 of the marine vessel 1 according to a first embodiment of the invention. The scrubber outlet assembly 100 comprises a pipe 200 comprising a first section 210 and a second section 220 connected to the first section 210. The first section 210 and the second section 220 are made from dissimilar electrically conductive materials. In this way, an inner surface 230 of the pipe 200 comprises a first portion 231 made from a first electrically conductive material, and a second portion 232 made from a second electrically conductive material, dissimilar to the first electrically conductive material. With the exception of the tube 410, which is introduced below, the first electrically conductive material is illustrated in Figures 2A and 2B with hatching directed upwardly to the left, while the second electrically conductive material is illustrated with hatching directed upwardly to the right.

In the illustrated example, the first portion 231 of the inner surface 230 of the pipe 200 is an inner surface of the first section 210 and the second portion 232 of the inner surface 230 of the pipe 200 is an inner surface of the second section 220. In other examples, the first and second portions 231, 232 of the inner surface 230 of the pipe 200 are portions of the inner surfaces of the respective first and second sections 210, 220. The inner surface 230 of the pipe 200 comprises the whole of the side of the pipe 200 which would be exposed to the flow path FP in the absence of the barrier 300. As such, the inner surface 230 of the pipe 200 comprises the first portion 231 and the second portion 232. Each of the first and second sections 210, 220 of the pipe 200 is tubular. Each of the first and second sections 210, 220 of the pipe 200 has a circular cross-section when viewed along the flow path FP. In other examples, the first and/or second sections 210, 220 of the pipe 200 have any suitable cross-sectional shape when viewed along the flow path FP, such as, but not limited to, a rectangular, a triangular, or an elliptical cross-section.

In other examples the first and second sections 210, 220 are made from any suitable materials, which may or may not be dissimilar, and a portion of the inner surface of the first section 210 is coated with the first electrically conductive material to form the first portion 231 of the inner surface 230 of the pipe 200, and a portion of the second section 220 is coated with the second electrically conductive material to form the second portion 232 of the inner surface 230 of the pipe 200. In some examples, only one of the first and second sections 210, 220 is coated with one of the first and second electrically conductive materials, and the other of the first and second sections is formed of the other of the first and second electrically conductive materials.

The scrubber outlet assembly, as indicated by the arrow labelled 100 in Figure 2A, has a flow path FP therethrough along which washwater is flowable from the scrubber 20 in use. The inner surface 230 of the pipe 200 comprises a region 240 comprising part of the first portion 231 of the inner surface 230 of the pipe 200 and a part of the second portion 232 of the inner surface 230 of the pipe 200. In other embodiments, the region 240 comprises all of the first portion 231 and/or all of the second portion 232. The region 240 represents an area of the inner surface 230 of the pipe 200 which would be particularly susceptible to galvanic corrosion in the presence of the washwater flowing along the flow path FP, in use, were it not for the barrier 300 discussed below. Specifically, the part of the first portion 231 and the part of the second portion 232 are in close enough proximity to one another in the region 240 that an electrical connection between the two portions 231, 232 via an electrolyte, such as the washwater, could result in a preferential corrosion of one of the dissimilar first and second electrically conductive materials of the inner surface 230.

In this example, the first and second sections 210, 220, which are made from the first and second electrically conductive materials, abut each other and are connected to each other by welding. In other examples, the first and second sections 210, 220 may be connected to each other by bonding or fixing, such as using a flange arrangement or other suitable connection. In some examples, the first and second sections 210, 220, and/or the first and second portions 231, 232, may be separated from each other, for example by a gap, by an electrically insulative material such as an insert or adhesive, and/or by a further electrically conductive material, such as a weld material, while still being sufficiently close to each other to present an increased risk galvanic corrosion in the region 240.

The scrubber outlet assembly 200 includes a barrier 300 located radially inwardly of the inner surface 230 of the pipe 200. As shown in Figure 2A, the barrier 300 fluidically isolates the region 240 from the flow path FP. The barrier 300 comprises a scrubber outlet diffuser 400 comprising a tube 410 spaced from the inner surface 230 of the pipe 200 to define a space 320 between the tube 410 and the inner surface 230. The tube 410 surrounds the flow path FP. The barrier 300 further comprises an adhesive 321 provided in the space 320 to secure the tube 410 to the inner surface 230. The adhesive 321 is in contact with the first and second portions 231, 232 of the inner surface 230 of the pipe 200. Specifically, the adhesive 321 completely fills the space 320, so that the barrier 300 is in contact with the region 240.

As best shown in Figure 2B, an outer surface 411 of the tube 410 comprises four protrusions 412. The protrusions 412 are raised portions of the outer surface 411 of the tube 410. That is, the protrusions 412 are integral with the tube 410. The protrusions 412 are elongate and extend longitudinally along the length of the tube 410. The protrusions are equally spaced circumferentially around the tube 412. The protrusions help to align the tube within the pipe 200 to provide the space between the tube and the pipe.

In some examples, the one or more protrusions 412 are distinct parts provided on the outer surface 411 of the tube 410, such as bonded to the outer surface 411 of the tube 410. In some examples, the protrusions 412 are circumferential protrusions 412 extending around at least a part of a circumference of the outer surface 411 of the tube 410. In other examples, the protrusions 412 are arranged on the outer surface 411 of the tube 410 in any other suitable way.

The tube 410 and the adhesive 321 are each made from electrically insulative material. In other words, the barrier 300 comprises an electrically insulative material bridging the part of the first portion 231 and the part of the second portion 232. In the illustrated example, the tube 410 is made of a glass-fibre reinforced epoxy (GRE), which is a corrosion-resistant and abrasion-resistant material. In some examples, the tube 410 is made of any other suitable corrosion-resistant and/or abrasion-resistant material, such as a vinyl ester. The adhesive 321 is made of an epoxy resin casting compound. The adhesive 321 is resilient to thermal and physical shock, thereby providing a more reliable bond between the tube 410 and the pipe 200 in the harsh conditions presented by the high-temperature washwater and the proximity of the scrubber outlet pipe to the hull 20, and thus the sea water surrounding the marine vessel 1, in use.

In other examples, the tube 410, or a part of the tube 410, is in contact with one or both of the first and second portions 231, 232 of the inner surface 230 of the pipe 200. In some examples, the adhesive 321 does not completely fill the space 320. In some examples, the barrier 300 does not contact, or only partially contacts, the region 240 of the inner surface 230 of the pipe 200. For example, the barrier 300 could be attached to portions of the pipe 200 other than the region 240, such as other than the inner surface 230 of the pipe 200. In some examples, the space 320 is not present, or is negligibly small. In some examples, the tube 410 is mounted within the pipe 200 in any suitable way, such as using a thin layer of adhesive between the tube 410 and the inner surface 230 of the pipe 200, or by fixing the tube to the pipe 200 using a suitable mechanical fixing mechanism, such as bolts, rivets, catches, or the like. In some examples, the tube is not present, and the barrier 300 comprises an electrically insulative material, such as an epoxy putty or resin, an adhesive, a corrosion-resistant coating, such as a vinyl ester coating, or any other suitable coating, applied to the inner surface 230 of the pipe 200 to cover the region 240 and shield it from the flow path FP.

In some examples, the tube 410 comprises or is made from any suitable material, which may comprise an electrically conductive material. In such examples, any part of the barrier 300, such as the adhesive 321, in contact with the first and/or second portions 231, 232 of the inner surface 230 of the pipe 200, comprises an electrically insulative material. In this way, a potential for galvanic corrosion between the barrier 300 and the respective first and/or second portion 231, 232 of the inner surface 230 of the pipe 200 may be reduced or eliminated. In other examples, the adhesive 321 is any other suitable adhesive 321.

The pipe 200 comprises a first open end 250 and a second open end 260. The first open end 250 is for receiving washwater from the scrubber 20, in use. The first open end comprises a flange 251 for connection to components of the scrubber 20 upstream of the scrubber outlet assembly 100, such as to a scrubber outlet valve (not shown) or pipework (also not shown) of the scrubber 20. In other examples, the flange 251 is not present, and the pipe 200 is connectable to the upstream components of the scrubber 20 in any suitable way, such as by welding, bonding, bolting, or fixing, for example using catches, clasps, and/or braces.

The second open end 260 is for discharging the washwater from the scrubber outlet assembly 100, in use. The second open end 260 is connectable to a part 21 of the hull 20 of the marine vessel 1. That is, the second section 220 of the pipe 200, and thus the second portion 232 of the inner surface 230 of the pipe 200, extends from the region 240 to the hull part 21, in use. The hull part 21 comprises an aperture 22, as best shown in Figure 2B, and the second open end 260 defines, or cooperates with the aperture 22 to define, the scrubber outlet 20 of the marine vessel 1, in use. In some examples, the pipe 200, such as the second section 220 of the pipe 200, extends through the aperture 22 and the second open end 260 defines the scrubber outlet 20 of the marine vessel 1. The pipe 200 is welded to the hull part 21, but may in some examples be bonded, or fixed by any other suitable mechanism to the hull part 21 or may be integrally formed with the hull part 21. In some examples, the hull part 21 is removable or removed from the rest of the hull 20 of the marine vessel 1, such as for ease of assembly of the scrubber outlet assembly 100, and in some cases may be considered a part of the scrubber outlet assembly 100.

In the illustrated example, the second electrically conductive material is the same as that of the hull part 21, such as mild steel, which may facilitate connection of the pipe 200 to the hull part 21. In other examples, the second electrically conductive material is a corrosion-resistant material. The first electrically conductive material is a corrosion-resistant material, which may reduce a potential for corrosion of a part of the first portion 231 of the inner surface 230 of the pipe 200 exposed to the flow path. The first electrically conductive material is an austenitic stainless-steel, specifically the stainless steel having the trade name 254 SMO^{™}. In other examples, the first electrically conductive material is any other suitable corrosion-resistant material or metal alloy, for example a nickel-chromium-based alloy. In some examples, the first and/or second electrically conductive material, optionally including the hull part 21, is coated with a corrosion-resistant coating, such as a vinyl ester coating.

In the present example, the tube 410 overlaps the region 240 and extends from within the pipe 200 to the second open end 260. In this way, the second section 220 of the pipe 200, and particularly the second portion 232 of the inner surface 230 of the pipe 200, may be better protected from corrosion. This is particularly advantageous where the second electrically conductive material is susceptible to corrosion in the presence of the washwater, such as if the second electrically conductive material is the same as the hull material. In the present example, a corrosion-resistant putty 340 is applied to an end of the tube 410 nearest to the first open end 250 of the pipe 200 to form a transition between the first portion 231 of the inner surface 230 of the pipe 200 and an inner surface of the tube 410, over which the washwater can flow, in use. The putty 340 may also help to retain the adhesive 321 in the space 320 during manufacture. In some examples, the putty 240 is not present. In some examples (not illustrated here), the tube 410 and/or the adhesive 321 extends from the first open end 250 to the second open end 260.

The illustrated scrubber outlet assembly 100 comprises a diffuser 420 located in the tube 410 and arranged to interrupt the flow path FP. The diffuser 420 is for imparting turbulence into, and/or changing a velocity component of, the washwater flowing in the flow path, in use. This is to reduce a pH level of the washwater in proximity to the scrubber outlet 20 of the marine vessel 1, such as in proximity to the hull part 21. For example, a reduced axial velocity, an increased radial or azimuthal velocity, and/or increased spin or turbulence in the flow, can lead to increased entrainment or mixing of the washwater with the sea water into which it is to be expelled.

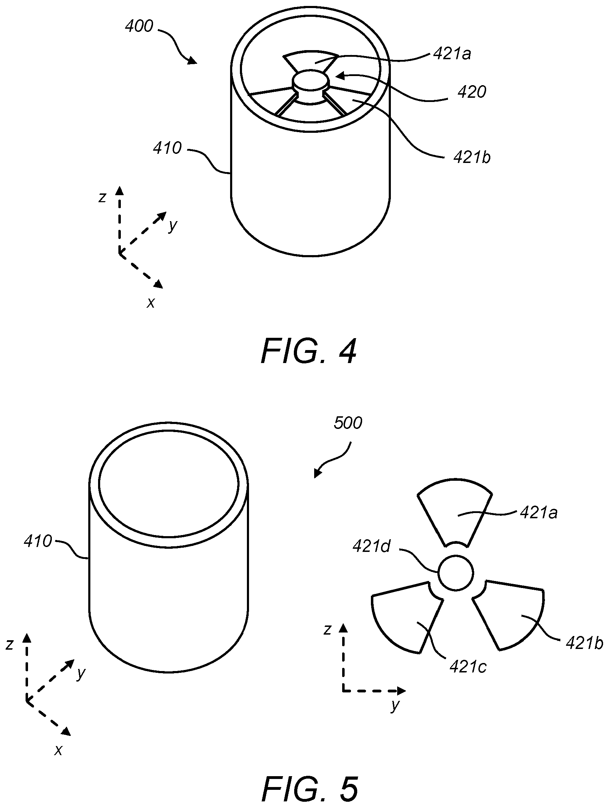

The diffuser 420 is formed of the same or similar material as the tube 410. Specifically, the diffuser 420 is formed from a corrosion-resistant material, for example an epoxy resin, such as a glass-fibre reinforced material (GRE) or vinyl ester. In other examples, the diffuser 420 is formed of any other suitable material. The diffuser 420 comprises plural diffuser parts 421a-421d assembled together to form the diffuser 420, as best understood from Figures 2B and 5. The diffuser parts 421a-d are a hub 421d and fins, or guide vanes, 421a-c for affecting a flow of washwater along the flow path FP, in use, though in other examples they may be any parts suitably shaped to affect the flow of washwater along the flow path FP. The diffuser parts 421a-d are bonded together to form the diffuser 420, with the fins 421a-c radiating from the hub 421d. The diffuser 420 is mounted within the tube 410 by bonding using an adhesive. In other examples, the diffuser 420 is mounted within the tube 410 in any other suitable way. In other examples, the diffuser 420 is integral with the tube 410 so that the tube 410 and diffuser 420 are unitary. In this way, a join between the diffuser 420 and the tube 410 is resistant to galvanic corrosion.

In another example, not shown in the Figures, the tube 410 is instead replaced by multiple, electrically-insulative pads. The pads are circumferentially spaced around the inner surface 230 of the pipe 200 to overlap the region 240. The pads are elongate and extend in an axial direction along the inner surface 230 of the pipe. In other examples, the pads are any other suitable shape and/or arranged in any other suitable manner, such as arranged to extend around a part of a circumference of the pipe 200. One or each of the diffuser fins 421a-c is bonded to a respective pad. In other examples, the diffuser 420 is fixed to one or more of the pads in any suitable way.

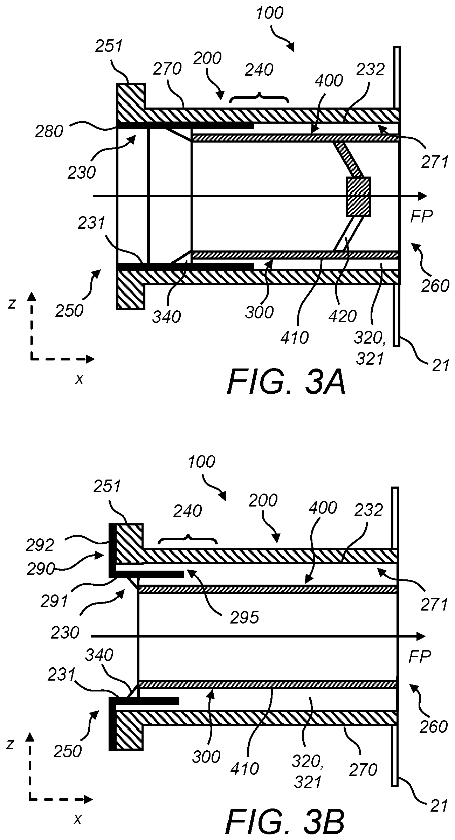

Figure 3A shows a cross-sectional view of a scrubber outlet assembly 100 according to a second embodiment of the invention. The scrubber outlet assembly 100 of the second embodiment is similar to the scrubber outlet assembly 100 of the first embodiment shown in Figures 2A and 2B. The features of the scrubber outlet assembly 100 of the second embodiment which are also present in the scrubber outlet assembly of the first embodiment are given the same reference numerals.

In contrast the first embodiment, the pipe 200 of the scrubber outlet assembly 100 of the second embodiment is formed from a single length of pipe, which we here refer to as a pipe section 270. The pipe section 270 is formed from the second electrically conductive material. In other words, the pipe 200 comprises a pipe section 270 having an inner surface 271 comprising the second electrically conductive material. The first electrically conductive material is provided on a portion of the inner surface 271 of the pipe section 270 to define the first portion 231 of the inner surface 230 of the pipe 200. The second portion 232 of the inner surface 230 of the pipe 200 is defined by the inner surface 271 of the remainder of the pipe section 270 which is free of the first electrically conductive material.

The first electrically-conductive material is a corrosion-resistant nickel-chromium-based alloy, specifically a material identified by the trade name Inconel^{®}. The Inconel^{®} is laser-clad to the inner surface 271 of the pipe section 270 to provide a cladding 280. In other examples, the first electrically-conductive material may be any other suitable corrosion-resistant material which may be clad or coated on the inner surface 271 of the pipe section 270. In some examples, the first electrically conductive material is also provided on the flange portion 250, such as to extend from the flange portion 250 to the region 240.

Figure 3B shows a further embodiment of the present invention. Common features of the embodiments shown in Figures 3A and 3B have the same reference numerals. Moreover, although no diffuser 420 such as that shown in Figure 3A is present in the embodiment of Figure 3B, in other examples, such a diffuser 420 may be present.

In the embodiment shown in Figure 3B, the first electrically conductive material is provided in the form of a tubular component 290, specifically a sleeve 290, inserted into the pipe section 270. The sleeve 290 comprises the first electrically-conductive material. That is, in the example illustrated in Figure 3B, the first portion 231 is defined by an inner surface 291 of the sleeve 290. The sleeve 290 comprises a flange 292 for connecting to the flange portion 250 of the pipe section 270. In the illustrated example, the sleeve 290, or a part thereof, is radially spaced from the inner surface 271 of the pipe section 270. That is, the first and second portions 231, 232 are separated from each other by a gap 295 between the sleeve 290 and the pipe section 270. In this example, the gap 295 is at least partially filled with an electrically insulative material in the form of an adhesive or chocking material, so that the sleeve 290 and the pipe section 270 may be considered separated by the electrically insulative material. In other examples, an insert or a further electrically conductive material, such as a weld material, may be provided in the gap 295. In any event, the first and second portions are, however, still sufficiently close to each other to present an increased risk of galvanic corrosion in the region 240 (i.e. in the absence of the barrier 300), and so the barrier 300 is provided to fluidically isolate the region 240 from the flow path FP. In other examples, the sleeve 290 is in contact with the inner surface 271 of the pipe section 270, and no such gap 295 is present.

In the illustrated example, the sleeve is made from an austenitic stainless steel, specifically 254 SMO^{™}. In other examples, sleeve 290 comprises, such as is made from, any other suitable corrosion-resistant material or metal alloy, for example a nickel-chromium-based alloy, and/or is coated in is coated with a corrosion-resistant coating, such as a vinyl ester coating.

As defined hereinbefore, the inner surface 230 of the pipe 200 comprises the whole of the side of the pipe 200 which would be exposed to the flow path FP in the absence of the barrier 300. In the example illustrated in Figure 3A, the inner surface 230 of the pipe 200 comprises both the first portion 231, which here is defined by the corrosion-resistant cladding 280, and the second portion 232, which here is defined by the remainder of the inner surface 271 of the pipe section 270 that is not covered by the cladding 280. In the example illustrated in Figure 3B, the inner surface 230 of the pipe 200 comprises both the first portion 231, which here is defined by a part of the tubular insert 290, specifically the inner surface 291 of the sleeve 290, and the second portion 232, which here is defined by the portion of the inner surface 271 of the pipe section 270 facing the flow path FP. The region 240 in each case comprises a region of the inner surface 230 where the first portion 231 transitions to the second portion 232, and specifically includes an edge of the corrosion-resistant cladding 280 and/or tubular insert 290 forming the first portion 231.

In each of the examples in Figures 2A to 3B, an overall axial length of the pipe 200 is approximately 1 m. In other examples, the length of the pipe 200 is any suitable length, such as up to 200 mm, up to 500 mm, up to 1 m, or up to 2m. A thickness of the first and/or second sections 210, 220 of the pipe 200, or the pipe section 270, measured between an inner surface and an outer surface of the respective section 210, 220, 270 of the pipe 200 in a direction perpendicular to the axial direction of the pipe 200, is between 5 mm and 100 mm, such as between 10 mm and 50 mm, between 15 mm and 30 mm, or between 20 mm and 25 mm, such as 23 mm. A thickness of the space 320, measured between the tube 410 and the inner surface 230 of the pipe 200 in a direction perpendicular to the axial direction of the pipe 200, is between 5 mm and 50 mm, such as between 10 mm and 40 mm, or between 20 mm and 30 mm, such as 25 mm. In some examples, the space 320 has a thickness between the tube 410 and the inner surface 230 of the pipe 200 of less than 5 mm. In some examples, the tube 410 has an overall axial length of up to 2 m, such as up to 1m, 700 mm, 500 mm, 300 mm, or up to 200 mm. In some examples, a thickness of the tube 410, measured between an inner surface 412 of the tube and the outer surface 411 of the tube 410 in a direction perpendicular to the axial direction of the tube 410, is between 5 mm and 100 mm, such as between 10 mm and 50 mm, or between 20 mm and 40 mm, such as 30 mm. In some examples, an internal diameter of the tube 410 is between 200 mm and 1 m, such as between 300 mm and 800 mm, between 500 and 700 mm, between 550 and 650 mm, such as 575 mm. In other examples, any one of the thicknesses and diameters discussed in this paragraph could be any other suitable value.

Figure 4 shows an example scrubber outlet diffuser 400. The diffuser 400 is the diffuser 400 shown in Figures 2A to 3.

Figure 5 shows an example kit of parts 500 for the scrubber outlet diffuser 400 of Figures 1 to 4. The kit of parts 500 comprises the tube 410 and the set of diffuser parts 421a-d configured to be assembled to form the diffuser 420. In some examples, the kit of parts 500 comprises a diffuser 420 which has already been assembled. The diffuser 420 is combinable with the tube 410 to form the scrubber outlet diffuser 400, such as by bonding the diffuser 420 with the tube 410.

Figure 6 shows an example kit of parts 600 for the scrubber outlet assembly 100 of the first embodiment shown in Figures 2A and 2B. The kit of parts 600 comprises the first pipe section 210 comprising the first portion 231 on its inner surface, and the second pipe section 220 comprising the second portion 232 on its inner surface. The first and second pipe sections 210, 220 are connectable to form the pipe 200. In some examples, the pipe 200 is provided in an assembled state, such as with the first and second pipe sections 210, 220 welded to each other. The kit of parts 600 further comprises the tube 410 and the diffuser parts 421a-d which are combinable to form the scrubber outlet diffuser 400, the scrubber outlet diffuser 400 being for location radially inwardly of the pipe 200 during formation of the scrubber outlet assembly 100.

In another embodiment, not expressly shown separately in the figures, the kit of parts 600 comprises the pipe section 270, and the first electrically conductive material configured to be applied to the inner surface 271 of the pipe section 270 to form the pipe 200 of the scrubber outlet assembly 100 of the second embodiment, shown in Figure 3A. In some examples, the kit of parts 600 comprises the sleeve 290 of the embodiment shown in Figure 3B.

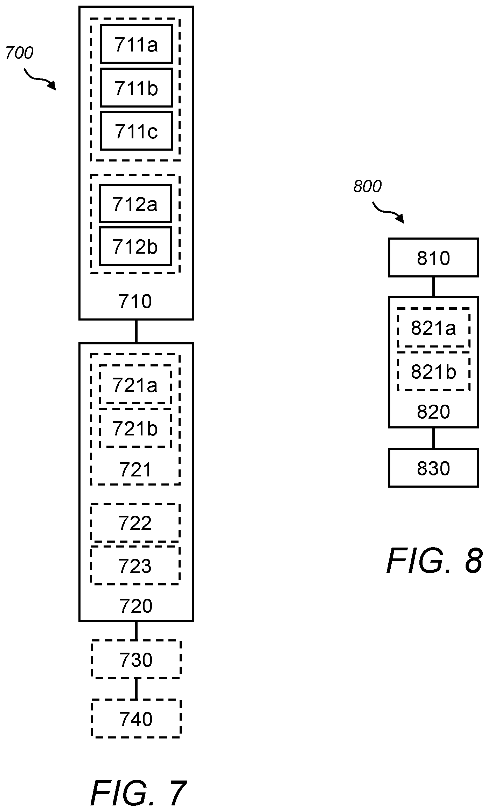

Figure 7 shows an example method 700 of assembling a scrubber outlet assembly, such as the scrubber outlet assembly 200 shown in Figures 2A and 2B, the scrubber outlet assembly 200 shown in Figure 3A, or the scrubber outlet assembly shown in Figure 3B. The method comprises providing 701 the pipe 200 having the inner surface 230, wherein the inner surface 230 has the first portion 231 and the second portion 232 and the region 240.

When the method 700 is the method 700 of assembling the scrubber outlet assembly 200 of the first embodiment shown in Figures 2A and 2B, the providing 710 the pipe 200 comprises providing 711a the first pipe section 210, providing 711b the second pipe section 220, and connecting 711c the first pipe section to the second pipe section to form the pipe 200. The connecting 711c may comprise welding, bonding, or fixing together in any suitable way.

Alternatively, when the method 700 is the method of assembling the scrubber outlet assembly 200 of the second embodiment shown in Figure 3A, the providing 710 the pipe 200 comprises providing 712a the pipe section 270, and providing 712b the first electrically conductive material on the inner surface 271 of the pipe section 270 to form the pipe 200 comprising the first and second portions 231, 232 of the inner surface 230 of the pipe 200. In the present example, the providing 712b the first electrically conductive material on the inner surface 271 comprises cladding the first electrically conductive material on the inner surface 271, though in some examples, the providing 712b comprises coating or fixing the first electrically conductive material on the inner surface 271 in any suitable way.

When the method 700 is the method of assembling the scrubber outlet assembly 200 of the embodiment shown in Figure 3B, the providing 710 the pipe 200 comprises providing 712a the pipe section 270, and providing 712b the first electrically conductive material in proximity to the inner surface 271 of the pipe section 270 to form the pipe 200 comprising the first and second portions 231, 232 of the inner surface 230 of the pipe 200. In the present example, the providing 712b the first electrically conductive material in proximity to the inner surface 271 comprises inserting the sleeve 290 into the pipe section 270 and fixing the sleeve 290 in position relative to the inner surface 271. In the present example, this is by bolting the flange 292 of the sleeve 290 to the flange portion 251. In other examples, the sleeve 290 may be fixed in proximity to the inner surface 271 of the pipe section 270 in any other suitable way.

The method 700 comprises providing 720 the barrier 300 radially inwardly of the inner surface 230 of the pipe 200 to fluidically isolate the region 240 from the flow path FP. Optionally, the providing 720 the barrier 300 in the pipe 200 comprises providing 721 the scrubber outlet diffuser 400, locating 722 the tube 410 in the pipe 200 to form the space 320 between the tube 410 and the pipe 200, and providing 723 the adhesive 321 in the space 320 to bond the tube 410 to the inner surface 230 of the pipe 200. Optionally, the providing 723 the adhesive 321 comprises filling the space 320. Optionally, the providing 723 the adhesive 321 comprises blocking one end of the space 320, pouring the adhesive 321 into the space 320, and allowing the adhesive 321 to cure, for example to harden.

Optionally, the providing 721 the scrubber outlet diffuser 400 comprises combining 721a the diffuser parts 421a-d to form the diffuser 420. Optionally, the providing 721 the scrubber outlet diffuser 400 alternatively, or additionally, comprises providing 721b the diffuser 420 in the tube 410 to form the scrubber outlet diffuser 400. Optionally, the providing 721b the diffuser 420 in the tube 410 comprises bonding, or otherwise fixing, the diffuser 420 in the tube 420, or forming the diffuser 420 and the tube 410 integrally with each other to provide a unitary scrubber outlet diffuser 400.

Optionally, the method 700 comprises connecting 730 the pipe 200 to the hull part 21. In some examples, the connecting 730 the pipe 200 to the hull part 21 comprises welding the second section 220, or the pipe section 270, to the hull part 21.

Optionally, the method 700 comprises connecting 740 the pipe 200 to a component of the scrubber 20 upstream of the pipe 200 with respect to the flow path FP, for example by coupling the flange portion 251 with a corresponding flange portion of the upstream component in any suitable way.

Figure 8 shows an example method 800 of assembling the scrubber outlet diffuser 400 shown in Figures 2A to 4. The method 800 comprises providing 810 the tube 410, providing 820 the diffuser 420, and fixing 830 the diffuser 420 to the tube 410. Optionally, the providing 820 the diffuser 420 comprises providing 821a the diffuser parts 421a-d and assembling 821b the diffuser parts 421a-d to form the diffuser 420. In some examples, the fixing 830 the diffuser to the tube comprises bonding the diffuser 420 to the tube 410, or integrally forming the diffuser 420 and the tube 410 to provide a unitary scrubber outlet diffuser 400.

The skilled reader will appreciate that embodiments of the present invention provide scrubber outlet assemblies, marine vessels comprising the scrubber outlet assemblies, and kits of parts for, and methods of, assembling the scrubber outlet assemblies, while addressing the aforementioned problems in conventional, and alternative, systems.

It will be understood that the marine vessel 1 may be any marine vessel, such as a container ship or bulk carrier ship for shipping cargo, a tanker ship, a pleasure craft, a submarine, or any other such marine vessel. It will also be understood that the embodiments described herein may be used with scrubber systems in other industries, such as in chemical processing facilities, power stations, wastewater treatment facilities, and any other such industries where it is necessary or desirable to remove pollutants, odours, and/or corrosive components from a gas stream before the gas in the gas stream is emitted into the environment.

It will also be understood that two or more of the above described embodiments may be combined. In other embodiments, features of one embodiment may be combined with features of one or more other embodiments.

Embodiments of the present invention have been discussed with particular reference to the examples illustrated.

## Claims

1. A scrubber outlet assembly (100), the scrubber outlet assembly comprising:
a pipe (200) having an inner surface (230), wherein the inner surface has a first portion made (231) from a first electrically conductive material, a second portion (232) made from a second electrically conductive material dissimilar to the first electrically conductive material, and a region (240) comprising at least a part of the first portion and at least a part of the second portion; and
a barrier (300) located inwardly of the inner surface of the pipe;
wherein the scrubber outlet assembly defines a flow path (FP) through the pipe along which washwater is flowable from a scrubber (10) in use, and wherein the barrier fluidically isolates the region from the flow path.

2. The scrubber outlet assembly of claim 1, wherein the barrier comprises an electrically insulative material bridging the part of the first portion and the part of the second portion.

3. The scrubber outlet assembly of either claim 1 or claim 2, wherein the barrier comprises a tube (410) surrounding the flow path.

4. The scrubber outlet assembly of claim 3, wherein the tube is bonded to the inner surface of the pipe by adhesive (321) between the tube and the pipe;
optionally, wherein the adhesive fills a space (320) between the tube and the inner surface of the pipe and contacts the part of the first portion and the part of the second portion of the inner surface of the pipe.

5. The scrubber outlet assembly of either claim 4, wherein the adhesive is a casting compound.

6. The scrubber outlet assembly according to any one of claims 3 to 5, comprising a diffuser (400) located in the tube and arranged to interrupt the flow path.

7. The scrubber outlet assembly of any one of claims 1 to 6, wherein the pipe comprises a pipe section (220) having an inner surface comprising the second electrically conductive material, wherein the first electrically conductive material is provided on a portion (231) of the inner surface of the pipe section to define the first portion of the inner surface of the pipe, and wherein the first electrically conductive material comprises a tubular component (290) on the portion of the inner surface of the pipe section.

8. The scrubber outlet assembly of claim 7, wherein the tubular component, or a part thereof, is radially spaced from the inner surface of the pipe section to provide a gap (295) between the tubular component and the inner surface of the pipe section;
optionally, wherein an electrically insulative material is located in the gap, so that at least parts of the first and second portions are separated by the electrically insulative material.

9. The scrubber outlet assembly of claim 7 or claim 8, wherein the tubular component is a sleeve (290), and wherein the sleeve comprises a flange portion (292) for connecting to a corresponding flange (250) of the pipe section on insertion of the sleeve into the pipe section.

10. A marine vessel (1) comprising a scrubber outlet assembly according to any one of claims 1 to 9.

11. A method (700) of assembling a scrubber outlet assembly, the method comprising:
providing (711a) a pipe (200) having an inner surface (230), wherein the inner surface has a first portion (231) made from a first electrically conductive material, a second portion (232) made from a second electrically conductive material dissimilar to the first electrically conductive material, and a region (240) comprising at least a part of the first portion and at least a part of the second portion, and wherein the pipe has a flow path (FP) therethrough along which washwater is flowable from a scrubber (10), in use; and
arranging a barrier (300) radially inwardly of the inner surface of the pipe to fluidically isolate the region from the flow path.

12. The method of claim 11, wherein the barrier comprises a tube (410), and the method comprises arranging the tube radially inwardly of the inner surface of the pipe so that the tube surrounds the flow path.

13. The method of claim 12, wherein the method comprises bonding the tube to the inner surface of the pipe by providing adhesive (321) between the tube and the pipe.

14. The method of claim 13, wherein the method comprises positioning the tube in the pipe to form a space (320) between the tube and the pipe, and filling the space between the tube and the inner surface of the pipe with the adhesive, so that the adhesive contacts the at least a part of the first portion and the at least a part of the second portion of the inner surface of the pipe.

## Patentansprüche

1. Wäscherauslassbaugruppe (100), wobei die Wäscherauslassbaugruppe umfasst:
ein Rohr (200) mit einer Innenfläche (230), wobei die Innenfläche einen ersten Abschnitt (231), der aus einem ersten elektrisch leitenden Material hergestellt ist, einen zweiten Abschnitt (232), der aus einem zweiten elektrisch leitenden Material hergestellt ist, das sich von dem ersten elektrisch leitenden Material unterscheidet, und einen Bereich (240), der zumindest einen Teil des ersten Abschnitts und zumindest einen Teil des zweiten Abschnitts umfasst, aufweist; und
eine Barriere (300), die sich nach innen von der Innenfläche des Rohrs befindet;
wobei die Wäscherauslassbaugruppe einen Strömungsweg (FP) durch das Rohr definiert, entlang dem Waschwasser im Gebrauch von einem Wäscher (10) strömen kann, und wobei die Barriere den Bereich von dem Strömungsweg fluidisch isoliert.

2. Wäscherauslassbaugruppe nach Anspruch 1, wobei die Barriere ein elektrisch isolierendes Material umfasst, das den Teil des ersten Abschnitts und den Teil des zweiten Abschnitts überbrückt.

3. Wäscherauslassbaugruppe nach Anspruch 1 oder Anspruch 2, wobei die Barriere ein Rohr (410) umfasst, das den Strömungsweg umgibt.

4. Wäscherauslassbaugruppe nach Anspruch 3, wobei das Rohr durch Klebstoff (321) zwischen dem Rohr und dem Rohr mit der Innenfläche des Rohrs verbunden ist;
optional, wobei der Klebstoff einen Raum (320) zwischen dem Rohr und der Innenfläche des Rohrs füllt und den Teil des ersten Abschnitts und den Teil des zweiten Abschnitts der Innenfläche des Rohrs kontaktiert.

5. Wäscherauslassbaugruppe nach Anspruch 4, wobei der Klebstoff eine Vergussmasse ist.

6. Wäscherauslassbaugruppe nach einem der Ansprüche 3 bis 5, umfassend einen Diffusor (400), der in dem Rohr angeordnet ist und angeordnet ist, um den Strömungsweg zu unterbrechen.

7. Wäscherauslassbaugruppe nach einem der Ansprüche 1 bis 6, wobei das Rohr einen Rohrabschnitt (220) umfasst, der eine Innenfläche aufweist, die das zweite elektrisch leitende Material umfasst, wobei das erste elektrisch leitende Material auf einem Abschnitt (231) der Innenfläche des Rohrabschnitts bereitgestellt ist, um den ersten Abschnitt der Innenfläche des Rohrs zu definieren, und wobei das erste elektrisch leitende Material ein rohrförmiges Bauteil (290) auf dem Abschnitt der Innenfläche des Rohrabschnitts umfasst.

8. Wäscherauslassbaugruppe nach Anspruch 7, wobei das rohrförmige Bauteil oder ein Teil davon radial von der Innenfläche des Rohrabschnitts beabstandet ist, um einen Spalt (295) zwischen dem rohrförmigen Bauteil und der Innenfläche des Rohrabschnitts bereitzustellen;
optional, wobei ein elektrisch isolierendes Material in dem Spalt angeordnet ist, so dass zumindest Teile des ersten und zweiten Abschnitts durch das elektrisch isolierende Material getrennt sind.

9. Wäscherauslassbaugruppe nach Anspruch 7 oder Anspruch 8, wobei das rohrförmige Bauteil eine Hülse (290) ist, und wobei die Hülse einen Flanschabschnitt (292) zum Verbinden mit einem entsprechenden Flansch (250) des Rohrabschnitts beim Einsetzen der Hülse in den Rohrabschnitt umfasst.

10. Seeschiff (1), umfassend eine Wäscherauslassbaugruppe nach einem der Ansprüche 1 bis 9.

11. Montageverfahren (700) für eine Wäscherauslassbaugruppe, wobei das Verfahren umfasst:
Bereitstellen (711a) eines Rohrs (200) mit einer Innenfläche (230), wobei die Innenfläche einen ersten Abschnitt (231), der aus einem ersten elektrisch leitenden Material hergestellt ist, einen zweiten Abschnitt (232), der aus einem zweiten elektrisch leitenden Material hergestellt ist, das sich von dem ersten elektrisch leitenden Material unterscheidet, und einen Bereich (240), der zumindest einen Teil des ersten Abschnitts und zumindest einen Teil des zweiten Abschnitts umfasst, aufweist, und wobei das Rohr einen Strömungsweg (FP) dadurch aufweist, entlang dem Waschwasser im Gebrauch von einem Wäscher (10) strömen kann; und
Anordnen einer Barriere (300) radial nach innen von der Innenfläche des Rohrs, um den Bereich von dem Strömungsweg fluidisch zu isolieren.

12. Verfahren nach Anspruch 11, wobei die Barriere ein Rohr (410) umfasst, und das Verfahren das Anordnen des Rohrs radial nach innen von der Innenfläche des Rohrs umfasst, so dass das Rohr den Strömungsweg umgibt.

13. Verfahren nach Anspruch 12, wobei das Verfahren das Verbinden des Rohrs mit der Innenfläche des Rohrs durch Bereitstellen von Klebstoff (321) zwischen dem Rohr und dem Rohr umfasst.

14. Verfahren nach Anspruch 13, wobei das Verfahren das Positionieren des Rohrs in dem Rohr umfasst, um einen Raum (320) zwischen dem Rohr und dem Rohr zu bilden, und das Füllen des Raums zwischen dem Rohr und der Innenfläche des Rohrs mit dem Klebstoff, so dass der Klebstoff den zumindest einen Teil des ersten Abschnitts und den zumindest einen Teil des zweiten Abschnitts der Innenfläche des Rohrs kontaktiert.

## Revendications

1. Ensemble sortie de laveur (100), l'ensemble sortie de laveur comprenant :
un tuyau (200) comportant une surface interne (230), dans lequel la surface interne présente une première portion (231) constituée d'un premier matériau électriquement conducteur, une seconde portion (232) constituée d'un second matériau électriquement conducteur différent du premier matériau électriquement conducteur, et une région (240) comprenant au moins une partie de la première portion et au moins une partie de la seconde portion ; et
une barrière (300) située à l'intérieur de la surface interne du tuyau ;
dans lequel l'ensemble sortie de laveur définit un trajet d'écoulement (FP) à travers le tuyau le long duquel peut s'écouler l'eau de lavage d'un laveur (10) en cours d'utilisation, et dans lequel la barrière isole fluidiquement la région du trajet d'écoulement.

2. Ensemble sortie de laveur selon la revendication 1, dans lequel la barrière comprend un matériau électriquement isolant reliant la partie de la première portion et la partie de la seconde portion.

3. Ensemble sortie de laveur selon la revendication 1 ou la revendication 2, dans lequel la barrière comprend un tube (410) entourant le trajet d'écoulement.

4. Ensemble sortie de laveur selon la revendication 3, dans lequel le tube est collé à la surface interne du tuyau par un adhésif (321) entre le tube et le tuyau ;
éventuellement, dans lequel l'adhésif remplit un espace (320) entre le tube et la surface interne du tuyau et entre en contact avec la partie de la première portion et la partie de la seconde portion de la surface interne du tuyau.

5. Ensemble sortie de laveur selon la revendication 4, dans lequel l'adhésif est un composé de moulage.

6. Ensemble sortie de laveur selon l'une quelconque des revendications 3 à 5, comprenant un diffuseur (400) situé dans le tube et agencé pour interrompre le trajet d'écoulement.

7. Ensemble sortie de laveur selon l'une quelconque des revendications 1 à 6, dans lequel le tuyau comprend une section de tuyau (220) ayant une surface interne comprenant le second matériau électriquement conducteur, dans lequel le premier matériau électriquement conducteur est prévu sur une portion (231) de la surface interne de la section de tuyau pour définir la première portion de la surface interne du tuyau, et dans lequel le premier matériau électriquement conducteur comprend un composant tubulaire (290) sur la portion de la surface interne de la section de tuyau.

8. Ensemble sortie de laveur selon la revendication 7, dans lequel le composant tubulaire, ou une partie de celui-ci, est espacé radialement de la surface interne de la section de tuyau pour fournir un espace (295) entre le composant tubulaire et la surface interne de la section de tuyau ;
éventuellement, dans lequel un matériau électriquement isolant est situé dans l'espace, de sorte qu'au moins certaines parties des première et seconde portions soient séparées par le matériau électriquement isolant.

9. Ensemble sortie de laveur selon la revendication 7 ou la revendication 8, dans lequel le composant tubulaire est un manchon (290), et dans lequel le manchon comprend une portion bride (292) destinée à être reliée à une bride correspondante (250) de la section de tuyau lors de l'insertion du manchon dans la section de tuyau.

10. Navire marin (1) comprenant un ensemble sortie de laveur selon l'une quelconque des revendications 1 à 9.

11. Procédé (700) d'assemblage d'un ensemble sortie de laveur, le procédé comprenant :
la fourniture (711a) d'un tuyau (200) comportant une surface interne (230), dans lequel la surface interne présente une première portion (231) constituée d'un premier matériau électriquement conducteur, une seconde portion (232) constituée d'un second matériau électriquement conducteur différent du premier matériau électriquement conducteur, et une région (240) comprenant au moins une partie de la première portion et au moins une partie de la seconde portion, et dans lequel le tuyau présente un trajet d'écoulement (FP) à travers celui-ci le long duquel peut s'écouler l'eau de lavage d'un laveur (10) en cours d'utilisation ; et
l'agencement d'une barrière (300) radialement vers l'intérieur de la surface interne du tuyau pour isoler fluidiquement la région du trajet d'écoulement.

12. Procédé selon la revendication 11, dans lequel la barrière comprend un tube (410), et le procédé consiste à agencer le tube radialement vers l'intérieur de la surface interne du tuyau de sorte que le tube entoure le trajet d'écoulement.

13. Procédé selon la revendication 12, dans lequel le procédé comprend le collage du tube à la surface interne du tuyau en fournissant un adhésif (321) entre le tube et le tuyau.

14. Procédé selon la revendication 13, dans lequel le procédé comprend le positionnement du tube dans le tuyau pour former un espace (320) entre le tube et le tuyau, et le remplissage de l'espace entre le tube et la surface interne du tuyau avec l'adhésif, de sorte que l'adhésif entre en contact avec l'au moins une partie de la première portion et l'au moins une partie de la seconde portion de la surface interne du tuyau.
